# EUROPEAN PATENT APPLICATION

(11) **EP 2 963 594 A1**
(43) Date of publication of application: **06.01.2016**
(21) Application number: 15175235.9
(22) Date of filing: 03.07.2015
(51) Int. Cl.: G06Q 10/00

(54) **SYSTEM FOR PRINTING ON CABLES**

(30) Priority: 04.07.2014 IT MI20141218
(71) Applicant: SIF S.A.S. di Claudio Formenti E C., 24040 Stezzano (BG) (IT)
(72) Inventor: FORMENTI, Claudio, 24048 Treviolo BG (IT)
(74) Representative: Modiano, Micaela Nadia

(57) **Abstract**

A system for printing on cables, particularly for inkjet printing, which has the particularity that it comprises: a) a first device (1) provided with processing means adapted to generate a code (3a) of the QR type on the basis on an input supplied to the first device (1) and; b) a second device (2) adapted to read the QR code (3a), the second device (2) being configured to interface with cable printers (7); the second device being adapted to supply the printers (7) with printing information on the basis of the content of the QR code (3a).

## Description

The present invention relates to a system for printing on cables, in particular to an improved system for applying information to cables. The invention also relates to software applications that can be run on components of the system and to a printing method.

Printing information on cables, also known as marking, consists in applying to the outer surface of a cable, typically the sheath, information related to the type of cable, the length, the identity of the manufacturer and the date of production start. Typically, a customer orders a manufacturing company to manufacture cables on which information (which often consist of very long texts with alphanumeric characters and also special characters) must be printed and the manufacturing company meets the request of the customer.

The printing processes of the background art, however, are rather manual and require human intervention, which usually causes mistakes.

In a first step, in fact, employees of the manufacturing company that manage the order of the customer (for example employees assigned to the management of production orders or "sales" employees) prepare a document, known as worksheet, which contains information regarding the order (for example the type of product to be manufactured and the quantity) and the marking, i.e., the information to be printed on the cables.

In a second step, the operators on the production line manufacture the cables according to the specifications contained in the worksheet. The operators on the production line manage special printers for printing on the external surface of the product, which usually are of the inkjet type and have an interface, such as a keyboard, for the entry of the data to be printed. The operator must manage the printer appropriately, configuring it so as to meet the request on the worksheet. Once this step has ended, a second operator checks whether the choices of the first operator match the provisions of the worksheet and gives clearance for production.

A system organized in this manner for managing the printing process is not devoid of drawbacks.

A drawback is the fact that the time for the entry of the information in the printer on the part of the operator of the production line is considerable, even half an hour per order to be managed.

Another drawback resides in that manual data entry errors on the part of the production line operator, due for example to inattention or incorrect understanding of the content of the worksheet, are likely and can compromise the entire print job, with a cost increase for the manufacturing company.

Another drawback resides in that in case of incorrect printing, the cable must be "reprocessed", i.e., reprinted after partially manual erasure, by means of solvents, of the incorrect lettering or even after replacing the cable sheath.

Another drawback is due to the fact that the production line operator has a considerable responsibility, since an error on his part can compromise the entire printing process. This operator necessarily must be a person with a certain degree of technical skill and therefore is a cost for the company with respect to a non-qualified employee.

Another drawback resides in that the printing process of the background art requires entering physically, on the printer interface, for example the keyboard, the data to be printed on the cable. The keyboard and in general the printer are therefore subjected to continuous mechanical stresses and can fail due to wear or dirt caused by contact.

Another drawback resides in that within a company there are various brands and models of printers and companies, to avoid being tied to a single printer manufacturer and be free to introduce new brands in the future, find it difficult to introduce changes and improvements in the process.

Another drawback is constituted by the fact that double-checking during production requires the invention of two workers and therefore has an impact on company economics.

The aim of the present invention is to overcome the limitations of the background art described above, devising a new system capable of improving the process for printing on cables, reducing the possibility of mistakes caused by human errors.

Within this aim, an object of the present invention is to provide a system that does not depend on the type of printer present on the production line.

This aim and these and other objects that will become better apparent hereinafter are achieved by a system according to claim 1.

This aim and these and other objects that will become better apparent hereinafter are also achieved by software applications according to claims 8 and 9 and by a method according to claim 10.

Advantageously, the system according to the present invention introduces savings thanks to the elimination of the times for data entry in the printer by the operator.

Conveniently, the system according to the present invention allows such a simplification of the entry operation as to relieve from responsibility the personnel attending the production line.

Conveniently, the system according to the present invention allows to eliminate entry errors on the part of the production line operator.

Conveniently, the system according to the present invention allows to lower the cost of the printing process thanks to the prevention of reprocessings caused by incorrect data entry.

Advantageously, the system according to the present invention allows to accelerate the times of delivery of the cables to the customer.

Advantageously, the system according to the present invention eliminates errors caused by an incorrect flow of information among the workers assigned to the management of the order and the production line operators.

Conveniently, the system according to the present invention allows a reduction in printer malfunctions.

Further characteristics and advantages of the invention will become better apparent from the detailed description that follows, given by way of nonlimiting example and accompanied by the corresponding figures, wherein:
Figure 1 is a block diagram of the system according to the present invention;
Figure 2 is a flowchart that explains the operation of the system according to the present invention.

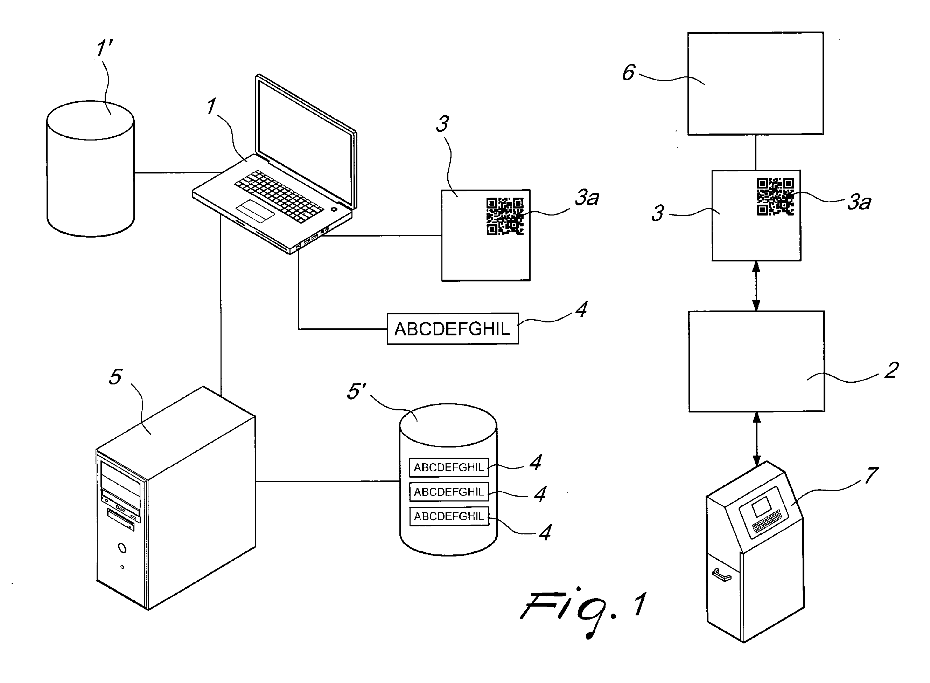

An exemplifying architecture of the system according to the present invention is summarized in the block diagram of Figure 1.

The system of Figure 1 comprises a first device 1, a second device 2, a code 3a, a marking code 4, a printer 7. The other elements are described hereinafter. In the continuation, it is assumed that the first device 1 is managed by the employee assigned to the management of the order and the second device 2 is managed by a production line operator.

The first device 1 is of a known type and is an electronic computer capable of processing information on the basis of instructions provided by an operator or by external devices and of running software modules. In one embodiment, shown in Figure 1, the first device 1 comprises a personal computer or an equivalent device that has similar computing power and similar capabilities of interfacing with external peripherals connected thereto, such as for example a local printer for printing labels 3 containing the code 3a. Conveniently, the device 1 is integrated in the company network of the manufacturing company and optionally is capable of communicating with the company information system 5.

In another embodiment, the device 1 comprises the company hardware architecture adapted to run the information system of said company. In this embodiment, the software modules can be integrated by means of adapted interfaces on the company information system.

The first device 1 is related to a workstation managed by an employee assigned to managing product orders from clients. Hereinafter, by way of non-limiting example, it is assumed that the product consists of cables provided with a sheath on which the customers request the printing of information, termed print information, which can comprise the format of the character, a number that corresponds to the length of the cable, the marking, i.e., a symbol or lettering with information of various kinds required by the client, as well as special characters of the type of CE, Rohs, UL or others, and other information that is useful for the printing process. The first device 1 is capable of processing a marking code 4.

The marking code 4 contains appropriately formatted printed information, including marking, to be printed on the sheath of the cable. Preferably, the marking code 4 is entered in the device 1 by the employee, who optionally retrieves it from the storage means 1'. Optionally, the marking code 4 is provided to the device 1 by the information system 5 of the manufacturing company, such as for example a company management system provided with storage means 5'. Conveniently, the device 1 has a software module adapted to create the marking code 4 on the basis of the print information provided by the employee of the manufacturing company. The marking code 4 is preferably provided as a text string, for example an alphanumeric one. In any case, such marking code 4 can be decoded by the processing means of the device 1. Furthermore, the marking code 4 is "universal", since it is independent of the type of printer 7 that is present.

In other words, the marking code 4 does not change if the order is performed on another line where there is a different printer 7 or if the printer 7 must be replaced, since, in a manner that will be clarified better hereinafter, the device 2 introduces an interfacing level that allows abstraction with respect to the type of printer 7 used.

The device 1 is capable of converting the marking code 4 into a code 3 a of the QR type (acronym of Quick Response code) adapted to be read by the second device 2.

The second device 2 is capable of reading or interpreting and decoding the information contained in the code 3a of the QR type, coding it in a format that can be understood by the printer 7 and sending to the printer 7 the information thus coded. Preferably, the second device 2 comprises at least one microcontroller provided with firmware. Typically, the device 2 is controlled by a production line operator. The device 2 further comprises means adapted to communicate the information extrapolated from the code 3a to the printer 7. The device 2, thanks to the firmware installed therein, is capable of managing various commercially available printers. If the printer 7 is replaced with another one of a different brand or model, it is sufficient to update the firmware of the device 2 so that it is capable of communicating with the new installed printer 7. Preferably, the device 2 has a USB port that can be used for updating. The device 2 is capable of establishing a communication channel with the printer 7 on the basis of various communication protocols. The device 2 is capable of communicating on RS232 and is provided preferably with conversion modules of the RS232/PROFIBUS, RS232/PROFINET, RS232/MODBUS, RS232/WIRELESS type that can be used to communicate with the printer 7. The operation for updating the second device 2 allows to support new communication protocols, to integrate graphical elements such as special characters, various types of logo (CE, Rohs, UL, ...) that can be printed on the cable and to install new functionalities, utilities for managing the printer 7. The device 2 is provided preferably with an RS232 or Ethernet port that can be used for example for connection to the printer 7. The second device 2 can also have a touchscreen that is adapted to provide information and feedback to the operator and comprises an interface for interacting with the printer 7, for example for entering print information (such as the current print date or the format of the font) that can be added to, or integrated with, those extrapolated from the code 3a.

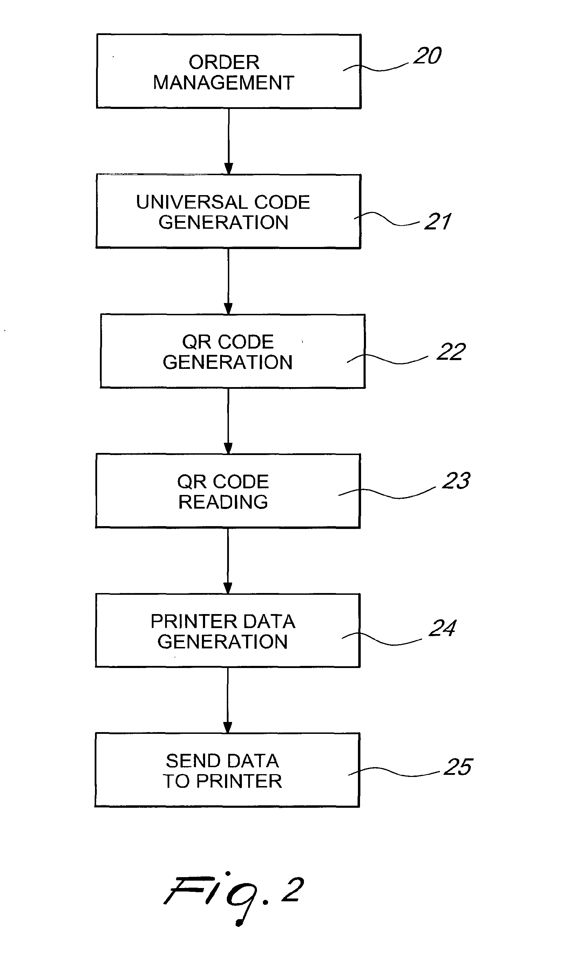

With reference to the flowchart of Figure 2, the operation of the method according to the invention is now described.

In step 20, an employee, for example of the office assigned to production management of the order, receives an order for the production of cables on which information will have to be printed on the basis of the requests of the customer. In this step, the employee chooses various settings that relate to the printing process: for example, he decides whether to print on the cable the length (an incremental progressive numeral that indicates the length of the cable or of a portion thereof), he decides the space that there must be between the print of the length and the marking (customer-specific information) and, if the length is not to be printed on the cable, he decides where to place the marking; he indicates the marking to be printed; he sets the format of the print font; he defines the presence of special characters to be applied to the cable (such as logos of the type of CE, Rohs, UL, ...); he sets, if necessary, a date to be printed on the cable. Preferably, the employee enters these choices by means of an adapted interface in the device 1, which, by means of an adapted software creation module, reprocesses them and codes them, creating the code 4.

In step 21, the marking code 4, also termed universal code 4, is created by the creation module on the basis of the input provided by the employee and therefore of the customer's specifications. Optionally, the employee can use a code 4 that was generated previously and saved on the storage means 1' of the device 1 or on the storage means 5' of the company information system 5.

In step 22, the code 3a of the QR type is generated by means of a processing of the universal code 4 on the part of the software modules of the device 1. The QR code 3a is printed on a label 3 and is applied to the worksheet 6 associated with the customer's order.

In step 23, the operator on the production line reads, by means of the device 2, the code 3a applied by means of the label 3 to the worksheet 6.

In step 24, the firmware present on the microcontroller of the device 2 interprets the content of the code 3a of the QR type that has been acquired and, after detecting the type of printer 7 to which the device 2 is connected, generates an item of information that is coded and is understandable to the printer 7 and is to be sent to the printer 7. Optionally, the production line operator can intervene on the less important aspects of the printing process, for example by entering, by means of the interface of the device 2, additional information (such as for example the date to be printed on the cable) to be included in the coded information to be sent to the printer 7.

In step 25, the coded information is sent to the printer 7, which provides the print information on the sheath of the cable according to the specifications contained by the information item received from the device 2.

It has thus been shown that the described system and method achieve the intended aim and objects. In particular, it has been shown that the system thus conceived allows to overcome the qualitative limitations of the background art, allowing to render the printing process immune to errors caused by incorrect entry or incorrect interpretations of the print orders by the production line operators, who are relieved of the task of setting the printer manually. In other words, the system allows to deliver to the printer 7 the information as decided by the employee controlling the device 1, who is the only person responsible for the printing process. The system according to the present invention can be integrated easily in existing systems, since it can be provided by installing additional software on company computers and by providing production line operators with the second device 2. Moreover, since there is no physical contact between the production line operator and the printer 7, the life of such printer increases considerably, since it is less subject to wear.

Furthermore, once installed, the system according to the present invention allows the management to use or replace any brand of printer, since it is no longer tightly tied to the type of printer 7 used. In the systems of the background art, printer replacement requires training the production line operator on how to use the new printer, with a consequent waste of time and money. Instead, thanks to the system according to the present invention, replacement of the printer 7 with another one of a different brand/model requires at most an update of the firmware of the device 2 and therefore the changes to be introduced in the system according to the present invention, if any are necessary, would be limited to the firmware run on the device 2. Furthermore, double-checking on the part of different production line operators, in order to check that the printing data are correct, is not necessary.

Clearly, numerous modifications are evident and can be performed promptly by the person skilled in the art without abandoning the protective scope of the present invention.

For example, it is possible to integrate in the company information system software modules that are equivalent to software modules that can be run on the device 1, so as to allow such information system to manage the marking code 4 and the code 3a of the QR type. In this case there is a software module adapted to export, from the database 5' (structured in a certain manner) of the information system 5, the marking code 4, and a software module adapted to process the marking code 4 and create the code 3a of the QR type.

Moreover, independently of the manner in which the device 1 is provided, it is possible to integrate in the company information system a software module for acquiring the code 3a of the QR type and for storing such QR code 3a in an image format, for example "*.png", in storage means that can be accessed by the information system.

Furthermore, it is evident for the person skilled in the art that although cables have been referenced in the present description, the invention can be applied also to printing on other types of product, for example pipes. Furthermore, although the code 3a has been referenced as a code of the QR type, it is possible to use equivalent codes, so long as they are readable by the device 2 and can be applied to the worksheet associated with the order. Furthermore, although in the system a single printer 7 has been referenced, it is obvious that the system can include a plurality of printers 7, which can be controlled by one or more second devices 2 that receive codes 3a of the QR type from one or more first devices 1.

Therefore, the protective scope of the claims must not be limited by the illustrations or by the preferred embodiments given in the description by way of examples, but rather the claims must comprise all the patentable novelty characteristics that reside within the present invention, including all the characteristics that would be treated as equivalent by the person skilled in the art.

The disclosures in Italian Patent Application no. MI2014A001218, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system for printing on cables, particularly for inkjet printing, comprising:
- a first device (1) provided with processing means adapted to run software modules, said first device (1) being adapted to generate a code (3a) of the QR (Quick Response) type, on the basis on an input supplied to said first device (1);
- a second device (2) adapted to read said code (3a) of the QR type, said second device (2) comprising means for interfacing with a cable printer (7); said second device (2) being adapted to supply said printer (7) with printing information on the basis of the content of said code (3a) of the QR type.

2. The system according to claim 1, **characterized in that** said input comprises a code of the alphanumeric type (4), termed marking code, said marking code (4) having encoded therein information comprising data that can be printed on said cable.

3. The system according to claim 1 or 2, **characterized in that** said marking code (4) comprises at least one among: an item of information associated with the length of said cable; a customized item of information that can be associated with the cable, termed marking, an item of information associated with the interval with which said information associated with the length must be spaced from said marking on said cable; an item of information associable with the placement of said marking, an item of information associable with the printing font, an item of information associable with the date when the printing process is performed; an item of information associable with the logo or logos (CE, Rohs, UL, ...) to be printed.

4. The system according to one or more of the preceding claims, **characterized in that** said code (3a) of the QR type is adapted to be printed on a label (3) that can be applied to a worksheet (6).

5. The system according to one or more of the preceding claims, **characterized in that** said processing means of said first device (1) are further adapted to generate said code (3a) of the QR type on the basis of a data item stored in a database (5') controlled by an information system (5); said processing means being configured to send to said information systems (5) an image that comprises said code (3a) of the QR type.

6. The system according to one or more of the preceding claims, **characterized in that** said first device (1) comprises a personal computer provided with storage means (1') or a company information system.

7. The system according to one or more of the preceding claims, **characterized in that** said second device (2) comprises a screen of the touch type and at least one microcontroller adapted to run at least one firmware, said second device (2) comprising means for detecting the type of printer (7) that is interfaced and for coding said information extrapolated from said code (3a) of the QR type on the basis of said type of printer (7).

8. An application for generating code (3a) of the QR type, adapted to be run on said first device (1) comprised in the system according to at least one of claims 1 to 7, comprising instructions adapted to:
- receive a code (4) of the alphanumeric type;
- extrapolating from said code (4) of the alphanumeric type information associated with printing on cables;
- coding said code (4) of the alphanumeric type in a code (3a) of the QR type;
- storing said code (4) of the alphanumeric type in a database connected to said device (1', 5') and associating an identifier with said code (4) of the alphanumeric type.

9. An application for managing printing on cables, adapted to be run by the second device (2) comprised in the system according to at least one of claims 1 to 7, comprising instructions adapted to:
- detect the type of printer (7) with which said second device (2) is interfaced and the type of communication channel between said second device (2) and said printer (7);
- coding, in a format that can be understood by said interfaced printer (7), the information contained in said code (3a) of the QR type;
- sending on said connection channel said coded information.

10. A method for printing on cables, particularly for inkjet printing, comprising:
- processing an input that preferably comprises a code (4) of the alphanumeric type that contains printing information;
- generating a code (3a) of the QR type on the basis of said input;
- providing printing information on the basis of the content of said code (3a) of the QR type.
